# EUROPEAN PATENT APPLICATION

(11) **EP 4 589 461 A1**
(43) Date of publication of application: **23.07.2025**
(21) Application number: 24152454.5
(22) Date of filing: 17.01.2024
(51) Int. Cl.: G06F 21/62, G06F 40/00, G06N 20/00

(54) **METHOD AND DATA PROCESSING SYSTEM FOR PROTECTING SENSITIVE INFORMATION**

(71) Applicant: Parloa GmbH, 10119 Berlin (DE)
(72) Inventor: Ostwald, Stefan, 10245 Berlin (DE)
(74) Representative: Burger, Hannes Alfred

(57) **Abstract**

It is provided a system and method for protecting sensitive information in an interaction of a computer with a counterpart, the method comprising receiving, by the computer, interaction information from the counterpart; determining, by a first machine-learning model, next action information based on the interaction information and within context of the interaction; generating, by a second machine-learning model, a response to the interaction information based on the next action information and within context of the interaction; and sending, by the computer, the response to the counterpart. It is also provided a computer program product and a computer-readable storage medium.

## Description

The present invention refers to protecting sensitive information in interaction with generative language models. In order to enhance data security, a method, a data processing system and a computer program product are provided.

Generative language models can be used for interactions, such as conversations. An interaction in the frame of this application is defined as passing on information in two directions. An interaction consists of a series of interaction information. Varieties of interactions are detailed in later parts of this document. These interactions are usually between a computer and a counterpart. The counterpart can be a user, customer, client, or other person, but also a computer or other data processing apparatus, which is utilizing the interface provided by the model. In order to be able to produce interaction information, such models need to be trained with existing interactions. Usually, interactions that are similar to the desired purpose are used for training. If, for example, the model is meant to provide interaction capabilities of technical support, previous technical support interactions are the basis of training for the model.

A special case of an interaction is a conversation, which is language based. In this case, it has been proven beneficial to use large language models as the generative, machine-learning models. These allow a computer to have a human-like dialog driven conversation. It should be noted that a dialog is meant to refer to a prompting action, while dialogue refers to a conversation.

An example of a technology in this area is the methodology ReAct that enhances agent-based systems by integrating reasoning with action. This method allows language models to reason by developing chains of thought to solve problems. The language models can generate task-specific actions and arguments and make observations. The actions are also sometimes called tools that the agent can use. This method allows using and combining of various, including external, information, which is accessible via APIs or databases, to solve problems and have a conversation about it.

It is also known to fine-tune pretrained models. So-called knowledge and skills can be learned by the model via data at the time of training. A common practice is to pre-train a model with a lot of data. In this phase, the model learns the language, its meaning and thus an understanding of the world. It also learns skills such as logical reasoning. In a subsequent phase, fine-tuning, further training is carried out for a comparatively short time using data from the specific field of application. In this way, the model learns, among other things, the knowledge contained in the data and how it should work with the incoming and outgoing data structures.

Another way to make knowledge available to the model is to make the knowledge available via the prompt during inference. The prompt usually has a restrictive length of possible input tokens, the context window, or a prompt that is too long leads to poorer performance. In order to fill the context window with relevant content, the relevant part is preselected from a larger data set, e.g. via embeddings, which can be done via a vector database, for example. This process is called Retrieval Augmented Generation, or RAG for short.

In an older, common structure a Natural Language Understanding (NLU) model performs a classification of the concern and a named entity extraction, optionally together with semantic role labelling, and extracts the intent and the slots. The state tracker contains the state of the dialogue. The policy plans the next step of the conversation. This can be an API call or a response.

A key problem when deploying bots, or language models, is the need for the bot to know the operating entities, e.g. a company, knowledge. This includes explicit knowledge, such as that found in onboarding materials and knowledge bases, as well as tacit knowledge acquired through employee experience and the direct exchange of experiences between employees. Customer or client conversations contain a substantial amount of knowledge and the desired conversation style. Further examples of such knowledge include used terminology and entity structures and names.

Another problem is that data anonymization is never perfect. In most cases, conversations contain personally identifiable information (PII). Automatic anonymization procedures cannot always completely remove this information, meaning there is always a residual risk of PII data being available to the model. This model could then be triggered by certain attacks to extract the data of the conversations, which could leak PII data.

In summary, in order to work robustly, the model requires company-specific knowledge, a substantial part of which is only contained in customer interactions.

It is also considered to be known, how conversational models, like ChatGPT work and how they process inputs, create responses, and maintain context in a conversation.

In currently employed techniques, a machine-learning model can be used for interaction with a counterpart. However, in order to be able to have an interaction, or conversation, the model needs to be trained on this type of interaction. This is typically achieved by supplying full, previously recorded interactions as training data. In order to be able to handle the different types of information, such training data comprises all of the PII and other sensitive data of these interactions.

In the known approaches, it is a disadvantage that sensitive information that is comprised within these previous interactions, can be leaked, since the model does only have limited or no awareness at all of the concept of sensitiveness of information.

In particular, there are two types of sensitive information, the first one is sensitive data associated with the current counterpart. As such, a person might call a company and ask for the latest invoice. If the person is authorized to have such information, the sensitive information can be supplied, if the person is not authorized, the information must not be leaked. The other type of sensitive data is data that is part of the training set, which is not associated with the current counterpart. Such information should never be leaked during a conversation or interaction.

US 2023 153460 A1 is aware of this problem and describes finetuning the model by using fake attackers.

In this approach, it is a disadvantage, that while the finetuning process is gradually improving the protection of sensitive information, the attacks need to be anticipated for the training, and new types of attacks cannot be prohibited.

### SUMMARY OF THE INVENTION

The object of the present invention is to provide an improved method and system for protecting sensitive information, or at least to provide an alternative to existing solutions.

The present invention solves this object by providing a method and system according to the independent claims. Further advantageous features are set out in the dependent claims.

In particular, the present invention achieves the solution to the problems of the prior art by categorically ruling out attacks on PII data, in that the model that generates the response is not exposed to any PII data in training.

The first aspect of the present invention refers to a method for protecting sensitive information in an interaction of a computer with a counterpart. The method comprises receiving, by the computer, interaction information from the counterpart. After that the method determines, by a first machine-learning model, next action information based on the interaction information and within context of the interaction. Following that, a second machine-learning model generates a response to the interaction information based on the next action information and within context of the interaction. The computer finally sends the response to the counterpart.

The first and/or second machine-learning model is an artificial neural network, and preferably a Natural Language Processing (NLP) model. In particular it is preferable that the models are Generative language models, like small or large language models.

By using two models, an additional layer of security is introduced, and the probability that sensitive information is leaked is reduced.

According to a further development, the first machine-learning model has been trained on a plurality of previous interactions with a plurality of counterparts comprising sensitive information of the plurality of counterparts, and the second machine-learning model has been trained on general interaction data not comprising sensitive information.

Since the second machine-learning model is trained without using sensitive information, the generated response cannot disclose any sensitive information.

According to another further development, the method further comprises abstracting, by a third machine-learning model, the interaction information within context of the interaction, wherein the third machine-learning model has been trained on general interaction data not comprising sensitive information.

By abstracting the interaction information, an additional layer of security is introduced, since any sensitive data, which would be comprised in the interaction information, is not passed on to the first machine-learning model.

According to another further development, abstracting comprises detecting and removing sensitive information from the interaction information.

Abstracting can be enhanced, by detecting the sensitive information and removing it before passing the interaction information to the first machine-learning model.

According to another further development, generating the response comprises enriching the response with additional data from at least one external data source.

By enriching the response, sensitive information that belong to the counterpart, and are therefore not required to be protected, can be introduced or re-introduced into the response.

According to another further development, the method further comprises validating, by the second machine-learning model, the response based on the next action information and within context of the interaction.

By validating, the overall quality of the interaction can be improved, since validation additionally verifies that the response is not only free from sensitive information, but also pertinent to the interaction.

According to another further development, the method further comprises detecting and removing sensitive information, which are not associated with the counterpart, from the response. This is done by the second machine-learning model.

Similar to removing sensitive information in the interaction information, sensitive information can be detected and removed from the response. This is an additional step increasing the security of sensitive information, as any sensitive information not associated with the current interaction counterpart can be removed, and is therefore not passed on to the counterpart, i.e. leaked.

According to another further development, the interaction between the computer and the counterpart is speech-based, optical, typed, or based on electronic interaction data.

According to a second aspect, a data processing system is provided. The data processing system comprises a first machine-learning model, a second machine-learning model, and a computer, and is used for protecting sensitive information in an interaction of the computer with a counterpart. The computer is configured to receive interaction information from the counterpart and to send a response to the interaction information to the counterpart. The first machine-learning model is configured to determine a next action information based on the interaction information and within context of the interaction. The second machine-learning model is configured to generate the response based on the next action information and within context of the interaction.

By using two models, an additional layer of security is introduced, and the probability that sensitive information is leaked is reduced.

According to one further development, the first machine-learning model has been trained on a plurality of previous interactions with a plurality of counterparts comprising sensitive information of the plurality of counterparts, and the second machine-learning model has been trained on general interaction data not comprising sensitive information.

Since the second machine-learning model is trained without using sensitive information, the generated response cannot disclose any sensitive information.

According to one further development, the data processing system further comprises a third machine-learning model, which is configured to abstract the interaction information within context of the interaction, wherein the third machine-learning model has been trained on general interaction data not comprising sensitive information.

By abstracting the interaction information, an additional layer of security is introduced, since any sensitive data, which would be comprised in the interaction information, is not passed on to the first machine-learning model. In addition to this, the first machine-learning model can be trained on abstracted information.

According to one further development, wherein the third machine-learning model is further configured to detect and remove sensitive information from the interaction information.

Abstracting can be enhanced, by detecting the sensitive information and removing it before passing the interaction information to the first machine-learning model.

According to one further development, the second machine-learning model is further configured to enrich the response with additional data from at least one external data source.

By enriching the response, sensitive information that belong to the counterpart, and are therefore not required to be protected, can be introduced or re-introduced into the response.

According to one further development, the second machine-learning model is further configured to validate the response based on the next action information and within context of the interaction.

By validating, the overall quality of the interaction can be improved, since validation additionally verifies that the response is not only free from sensitive information, but also pertinent to the interaction.

According to one further development, the second machine-learning model is further configured to detect and remove sensitive information, which are not associated with the counterpart, from the response.

Similar to removing sensitive information in the interaction information, sensitive information can be detected and removed from the response. This is an additional step increasing the security of sensitive information, as any sensitive information not associated with the current interaction counterpart can be removed, and is therefore not passed on to the counterpart, i.e. leaked.

According to one further development, the interaction between the computer and the counterpart is speech-based, optical, typed, or based on electronic interaction data.

According to a third aspect, a computer program product comprises instructions which, when the program is executed by a processing device, cause the processing device to carry any of the afore-mentioned methods. One further development thereof is a computer-readable storage medium, data carrier, or data carrier signal carrying the computer program product.

It is noted that the subject-matter of the embodiments described for the method can also be employed in the other aspects, wherein even embodiments can be combined.

### BRIEF DESCRIPTION OF THE DRAWINGS

The embodiments are illustrated in the drawings in which like reference numerals refer to like elements and in which:
- Fig. 1: shows an exemplary arrangement of the data processing system and the counterpart according to the invention,
- Fig. 2: shows another exemplary arrangement of the data processing system and the counterpart according to the invention, and
- Fig. 3: shows a flowchart of the method according to the invention.

It is noted that in the differently described embodiments, the same parts are provided with the same reference numbers or the same component designations, wherein the disclosure can be applied to the same or similar parts with the same or similar reference numbers or the same or similar component designations. The position designations in the description, such as top, bottom, side, etc., are related to the directly described and illustrated figure and these position designations can be transferred to other positions for other figures.

### DETAILED DESCRIPTION OF THE INVENTION

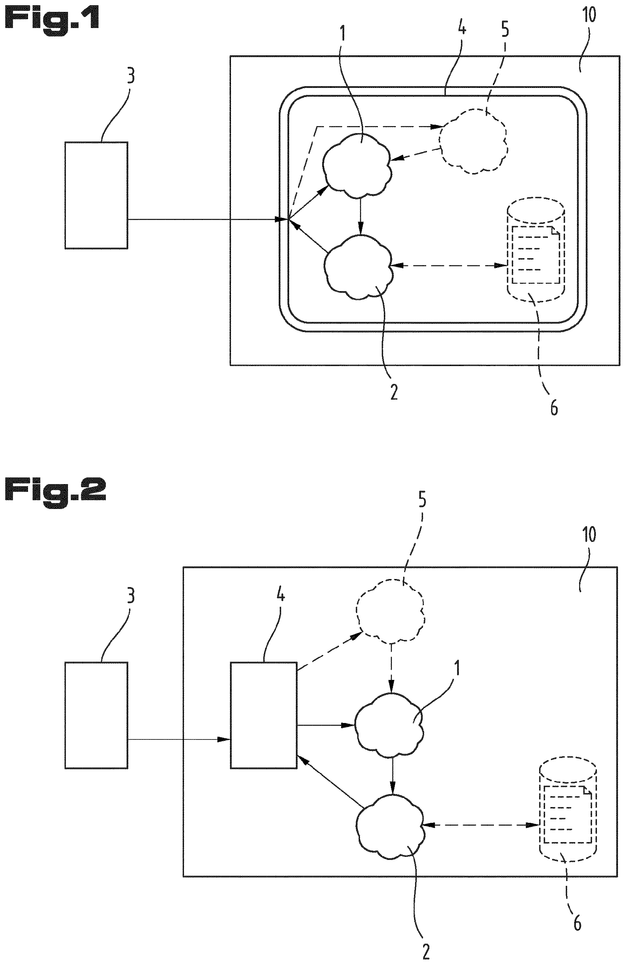

Figs. 1 and 2 show exemplary arrangements of the data processing system 10 and the counterpart 3 according to the invention. In Fig. 1, the data processing system 10 comprises the computer 4, and therein are the first 1 and second 2 machine-learning models. In the computer 4, further optional third machine-learning module 5 and an external data source 6, which is external of any machine-learning modules, can be comprised.

Fig. 2 shows an alternative arrangement, wherein the first 1, second 2 and - if present - third 5 machine-learning models as well as the optional external data source 6 are not located within the computer 4. In this case, the models 1, 2, 5 and the data source 6 can be connected to the computer via wire or wirelessly, and they can be on the same site as the computer 4 but also distant. The connection can be embodied as internet connections where commonly known security measures can be applied, i.e. VPN, encryption, etc. It should also be noted that the models 1, 2, 5 and the data source 6 can be connected to more than one computer 4 with similar purposes. Further each computer 4 can be in interaction with more than one counterpart 3.

The concurrency of these interactions on the computer 4 can be achieved with commonly known techniques like multi-tasking, multi-threading, etc.

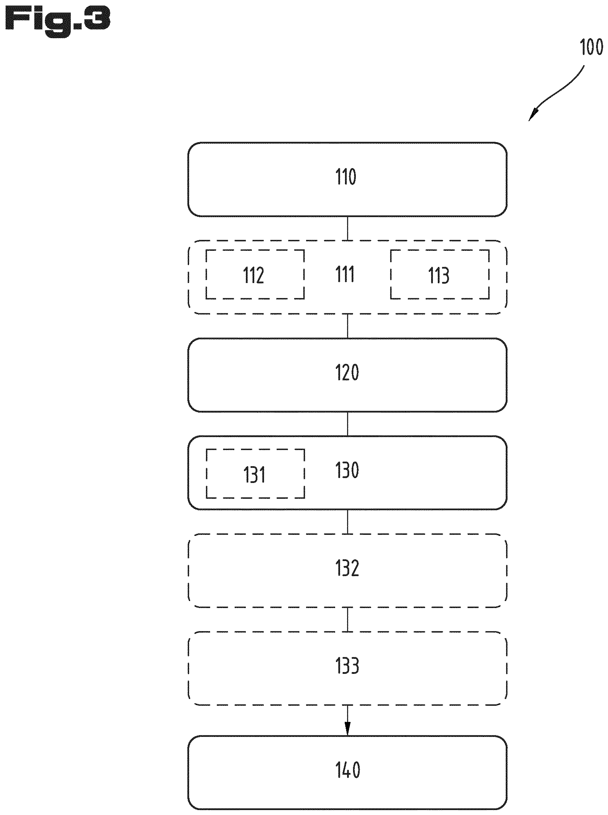

Fig. 3 shows a flowchart of the method 100 of the present invention as embodied by the data processing system 10 of Fig. 1 or 2.

In today's technological landscape, interactions of so-called artificial intelligence systems are implemented by using machine-learning models. Depending on the purpose of the interaction, different type can be employed. One purpose, for example, is communication in a conversation. Such a conversation is an interaction. The interaction consists of interaction information. In terms of a conversation, such interaction information can for example be a conversation element or contribution, like a question, a reply, a statement, an information etc.

With current interaction systems, often chat bots, voice bots, text bots and multimodal bots like avatars, are used. These bots are capable of human-like interactions and imitate and complete tasks. They are used in various areas such as customer service, sales, and marketing.

The interactions, or conversations, can be based on different techniques. Chat bots for example are based on typed language information. Voice bots are based on voice, and are used with telephones or telephone-like communication like online voice chat or via a messaging app. Other types of interaction also exist, optical communication can take into account body language, gestures, facial expressions, or other physical signals and even body features like temperature, heart-beat rate, size, age, clothing, etc., via a camera or similar optical detection devices. Also, physical interaction can be used, like interaction of an electronic key or key-like device and smart cards or electronic banking cards. It is also possible that an interaction in the terms of this document employs a mixture or combination of the above-mentioned techniques.

It is common to all those interactions, that a counterpart 3, which can be a user, a client, a customer, an employee, or similar person with relationship to the entity operating the computer 4, but also any other person, which has access to the computer 4.

The access to computer 4 can be direct via a terminal or keyboard and other input devices, but also via a data link connection like the internet or private data network.

It should also be noted that counterpart 3 can also be a computer or data processing apparatus, such as an automated system interacting with bots of several companies to determine the best offer for a predetermined task, or the like.

If the interaction is a conversation that is language based, it has been proven beneficial to use Generative language models, like large language models (LLMs) or small language models (SLMs), as the machine-learning models 1, 2 and 5. Generative language models allow a computer 4 to have a human-like dialog driven conversation. A computer 4 can then use other tools to improve the conversation. As an example, a weather report can be accessed in order to include such information into the conversation.

In the method 100, the computer 4 receives interaction information from the counterpart 3 in the step of receiving 110. As stated before, the data link between the computer 4 and the counterpart 3 can be a terminal, but also any data transmitting connection such as via wired or wireless connection and possibly via the internet. The interaction information is an element of the interaction, and in a speech-like conversation, this can represent a question or statement.

As examples, the interaction information received by the computer 4 can be i) the statement "Hello", ii) the question "How can I change my billing information?", and iii) the instruction "Give me the contract number of John Doe." It is noted that these are merely examples, and that any of this interaction information can be supplied to the computer 4 via speech, text-based entry, or other methods. It is similarly possible, that instead of "Hello" a greeting gesture is inputted.

The interaction information is then passed on to the first machine-learning model 1, which determines next action information, in step 120, on the basis of the interaction information and within context of the interaction.

The interaction information is simply passed on to the first machine-learning model 1 in case the first machine-learning model 1 is part of the computer 4, as shown in Fig. 1. If the first machine-learning model 1 is not part of the computer 4, as shown in Fig. 2, but rather located distant from the computer 4, common communication techniques can be employed to transmit the interaction information to the first machine-learning model 1.

The first machine-learning model 1 determines next action information based on the interaction information. In the example i) from above, the next action information can comprise the information that the next action is a response to a greeting. In the example ii) from above, the next action information can comprise the information that the next action is a reply to the question of how to change a billing information. And in the example iii) from above, the next action information can comprise the information that the next action is a response to a data query of a contract number. It is noted that the determination of the next action information is within context of the interaction. This means, that the first machine-learning model 1 is aware of the current interaction and can take previous interaction information into account in the determination. For example, if a spelling mistake is corrected, the dialogue could be: "What is the time in Berlyn?" - "I do not know a place called Berlyn." - "I meant Berlin." - "The current time in Berlin, Germany is 13:37. Did you mean a different place called Berlin?" It is therefore not necessary to repeat the full question. Context is also helpful with interpreting certain terms. If the dialogue is about a delivery to a certain address, the shortened expression "address" would likely be interpreted as delivery address in the context of the interaction.

The next action information is then passed on to the second machine-learning model 2, which generates a response to the interaction information, in step 130, on the basis of the next action information and within context of the interaction. The next action information is determined by the first machine-learning model 1 in such a manner, that the relevant information of the interaction information is included.

For passing on the next action information to the second machine-learning model 2, the same is true as stated above in terms of the first machine-learning model 1.

The second machine-learning model 2 generates a response on the basis of the next action information and within the context of the interaction. In the example i) from above, the response next can be "Good day to you, too." In the example ii) from above, the response can be "Which part(s) of billing information do you want to modify?". And in the example iii) from above, the response can be "In order to access such information, you need to authenticate." The details on context indicated above for the first machine-learning model 1 also apply here.

The response is then passed on to the computer 4, where again the above details for data communication apply. Finally, in step 140, the response is sent from the computer 4 to the counterpart 3.

The method 100 can loop, such that the interaction can continue. The method 100 can also be part of a larger set of techniques. For example, there can be certain pre-determined responses to certain, possibly often-used interaction information, like phrases, and only if no matching response is found in the pre-determined set, the machine-learning models 1 and 2 are employed for the current interaction information.

By having two machine-learning models 1 and 2 the probability of sensitive information leaking is already reduced.

The first machine-learning model 1 is planning the interaction flow, and to achieve this, it uses descriptions in text form to understand when which next action can be helpful, this is usually called instruction following. In structures according to the prior art, this type of information is only made available via example dialogues, i.e. implicitly via the training data.

As stated above, the first and/or second machine-learning model 1, 2 is an artificial neural network, and preferably a Natural Language Processing (NLP) model. In particular it is preferable that the models are Generative language models, like small or large language models.

In prior art structures comprising a Natural Language Understanding model, a conversation state is based centrally on the classification results of the NLU. In contrast thereto, in the present invention, the conversation state is accessible via the conversation and the text-based intermediate results, i.e. the next action information. The first machine-learning model 1 can be a large language model. Through this structural change, the first machine-learning model 1 can use the capabilities of LLMs as a planning model. By this, for example, cross-references and context can be resolved properly.

The system 10 can optionally generate multiple answers that are presented to the user. This ability is particularly important for voice-based systems, as the reaction time in a conversation is even more important than in text communication. However, this can be beneficial for both types.

Through so-called intermediate responses, the response from the computer can be played out even while the response is still generated. Intermediate thoughts and observations can be used to provide feedback to the counterpart 3. For example, the system 10 can detect that generating the response takes longer than a predetermined amount of time and inform the counterpart 3 with a pertinent response like "Please wait, your response is being generated." or "Your order is accessed in our database."

The security of sensitive information can even further be increased, when the first machine-learning model 1 has been trained on a plurality of previous interactions with a plurality of counterparts comprising sensitive information of the plurality of counterparts, and the second machine-learning model 2 has been trained on general interaction data not comprising sensitive information.

This is in particular beneficial, since the response generated by the second machine-learning model 2 cannot contain any sensitive data, except from the context of the interaction or the data that is transported via the next action information, which is determined by the first machine-learning model 1, and which is thus originating from the counterpart 3. Since the second machine-learning model 2 is trained without using sensitive information at all, the generated response cannot disclose any sensitive information.

The data processing system 10 can also comprise more models, but comprises according to this further development, at least one machine-learning model 1, also sometimes called PII model, that has been trained with data that contains or possibly contains PII, and at least one machine-learning model 2, a so-called non-PII model, that has been trained without any sensitive data. It should be noted that the term sensitive data refers to the actual data present in the training data. Even a drafted set of training data would contain data, which appear to be of the sensitive type. For example, for training the data set of "John Doe, born Jan. 1st 1995" would be used, where the date of birth - per se - is a sensitive data. Since this data does however not relate to actual persons, they are not considered as sensitive in the context of this invention.

Through training, the PII model 1 was able to learn relevant knowledge through customer conversations. The customer conversations have possibly been anonymized. However, even after anonymization, the PII model 1 has a risk of PII data leaking. The PII model 1 is used in intermediate steps, i.e. planning the interaction, but not to generate responses to the counterpart 3 to avoid leaking PII data.

Training of the PII model 1 can be performed with data of the specific task only, i.e. concrete historical data of the operating entity, but it can also be trained by industry-specific data or even across a company cluster, i.e. with data from more than one industry or from more than one task. Training data can also be restricted further to for example only the previous interaction with the specific counterpart 3 or to a class of counterparts, based on region, country or the like, or other specific features that allow classification.

The first machine-learning or PII model 1 can be trained from scratch, fine-tuned, or augmented by using RAG, whereby, for example, data from past interactions with a plurality of counterparts can be retrieved to determine the next action.

The second machine-learning model or non-PII model 2, is trained without specific data. It therefore does not contain any PII data. This model is used to generate the answer.

In summary, the method 100 can be paraphrased in the following way:
The first machine-learning or PII model 1 receives the conversation part from the counterpart 3 and plans the next action of the interaction. Planning takes place in the context of the current conversation or interaction. This also includes the current user situation, environmental data such as time, weather, social events, and even previous interactions with the counterpart 3. Further information, e.g. external public data from the internet, can also be included. The plan can also refer to more than just the next action. The plan from PII model 1 can refer to a who le interaction, with the achievement of a goal at the end of the plan. An example for this is updating an address, where individual steps of street information, ZIP code information, city information, country information can already be planned ahead.

Providing a chain of thought, which can generate an intermediate response or thought, can optionally be included.

The next action information can optionally be a selection from a list of possible actions. Thereby also the security can be increased since insecure actions can simply be excluded from that list.

The possible next actions can also be adapted depending on the situation, like time, place, or based on other information.

The possible next actions can also be loaded upon booting or during runtime.

Examples for possible actions are code calls, API calls, database access or access to a memory device, LLM calls or an action from or with other technical devices.

The second machine-learning model or non-PII model 2 generates the response, or put another way, generates the transfer values for the actions. The action is then executed. The action output is interpreted in the context of the last thought, or other data, to answer the underlying motivation of the thought. Not all actions must result in a reply to the interaction information.

It is also noted that the first machine-learning or PII model 1 can use the response generated by the second machine-learning or non-PII model 2 to further plan the next step or steps of the interaction.

The method 100 is ended by sending the response to the counterpart 3, the method 100 can also be ended by other actions, some actions do not comprise sending information to the counterpart 3, for example, there may be a stop action whose sole purpose is to end the cycle of method 100.

Method 100 can be run in a loop, so that interactions or conversations are enabled. Such loops can run synchronously or in parallel, and there can also be one or more parallel loop executions.

The method 100 can further comprise abstracting 111, by a third machine-learning model 5, the interaction information within context of the interaction, wherein the third machine-learning model 5 has been trained on general interaction data not comprising sensitive information.

By abstracting the interaction information, an additional layer of security is introduced, since any sensitive data, that would be comprised in the interaction information, is not passed on to the first machine-learning model. Abstracting the interaction information modifies the interaction information between receiving in step 110 and determining the next action information in step 120. The third machine-learning model 5 takes the interaction information and creates an abstracted or paraphrased version, on which the first machine-learning model 1 then bases its determination of the next action information. In the step of abstracting 111 the third machine-learning model 5 adds a layer to the level of concreteness of the interaction information. As an example, in relation to the above examples, an abstracted interaction information could be i) "The counterpart is greeting", for ii) "The counterpart is requesting to change parts of his stored information", and for iii) "The counterpart is requesting contract information of a user".

By adding a layer in this manner, the risk of leaking sensitive data is further reduced, since abstracting 111 can already remove sensitive data from the interaction information. In case of the examples, the name John Doe was removed by abstracting 111 already.

The method 100 can then even further be improved, if, when using such an abstraction layer or abstraction step 111, the first machine-learning model 1 has been trained or fine-tuned with using abstracted information. Thereby, there is not only the security enhancement of sensitive information being passed on less from the third machine-learning model 5 to the first machine-learning model 1, but the first machine-learning model 1 is also trained without using any potentially sensitive data.

In order to further improve this, abstracting 111 can comprise detecting 112 and removing 113 sensitive information from the interaction information. Abstracting 111 can be enhanced, by detecting 112 the sensitive information and removing 113 it before passing the interaction information to the first machine-learning model 1. Sensitive information can be detected by matching with stored information, like a list or database, or a dictionary. In removing 113, the detected sensitive information can be just deleted or replaced with a placeholder. Alternatively abstracting can only comprise detecting 112 and follow with marking the interaction information for other processing, like raising an alert. The abstracted interaction information can further be used for training or fine-tuning the first machine-learning model 1, thereby even further reducing the risk of leaking sensitive data.

The overall quality of the response can also be enhanced, for example by enriching 131 the response with additional data from at least one external data source 6 while generating it in step 130. By enriching 131 the response, sensitive information that belong to the counterpart 3, and are therefore not required to be protected, can be introduced or re-introduced into the response. For example, in interacting with a client a protected data space can be access, where the client information is stored. This can be a dedicated file or a specifically protected part of a database. The protection can be realised as a requirement to authenticate the client, for example by prompting for a username and password combination.

Other uses of enriching 131 can be current information, such as special offers or other information that is found to be applicable to the particular client acting as counterpart 3.

Enriching 131 can also comprise Retrieval Augmented Generation.

The method can further comprise validating 132, by the second machine-learning model 2, the response based on the next action information and within context of the interaction. By validating 132, the overall quality of the interaction can be improved, since validation 132 additionally verifies that the response is not only free from sensitive information, but also pertinent to the interaction.

Similar to the above-described steps 112 and 113, the method 100 can further comprise detecting and removing 133 sensitive information, which are not associated with the counterpart 3, from the response. This is also done by the second machine-learning model 2. Thereby, it can be ensured that the response does not contain sensitive information that the counterpart 3 should not receive. Further details are similar to the above-described steps 112 and 113. Similar to detecting 112 and removing 113 sensitive information in the interaction information, sensitive information can be detected and removed 113 from the response. This is an additional step increasing the security of sensitive information, as any sensitive information not associated with the current interaction counterpart can be removed, and is therefore not passed on to the counterpart, i.e. leaked.

As stated above, the interaction between the computer 4 and the counterpart 3 can be speech-based, but it does also apply to optical, typed, or based on electronic interaction data. In particular, the interaction information can also be based on interaction type, i.e. speech, gestures, images, videos or text, or electronic data containing text. Further input options are biosensors like electroencephalography (EEG), heart-beat sensors and also environmental sensors for temperature, humidity, and the like. Also, a combination of these options is possible, as well in one interaction information, e.g. speech and gestures, as in different interaction information, e.g. speech input, image response.

The system 10 can be correspondingly expanded to provide the necessary devices for the corresponding input and output. There can be provided a microphone, keyboard, camera, a banking device (ATM), an NFC interface, a smart card interface, a pointing device like a mouse, etc. The same devices can also be used for output together with screens, speakers, etc.

It is noted that the subject-matter of the features described for the method can also be employed in the other aspects, wherein even embodiments can be combined.

The exemplary embodiments show possible implementation variants, whereby it should be noted at this point that the invention is not limited to the specifically described design variants, but rather various combinations of the individual features with one another are possible. In particular, the features described in context of the method can also be included into the system.

The scope of protection is determined by the claims. However, the description and the drawings are to be used to interpret the claims.

Individual features or combinations of features from the different exemplary embodiments shown and described can represent independent inventive solutions. The object on which the independent inventive solutions are based can be found in the description.

All information on value ranges in the present description are to be understood in such a way that they include any and all sub-ranges thereof, e.g. the information 1 to 10 is to be understood in such a way that all sub-ranges, starting from the lower limit 1 and the upper limit 10, are also included, i.e. all sub-ranges begin with a lower limit of 1 or greater and end at an upper limit of 10 or less, for example 1 to 1.7, or 3.2 to 8.1, or 5.5 to 10.

### LIST OF REFERENCE SIGNS

- 1: First machine-learning model
- 2: Second machine-learning model
- 3: Counterpart
- 4: Computer
- 5: Third machine-learning model
- 6: External data source
- 10: Data processing system for protecting sensitive information
- 100: Method for protecting sensitive information
- 110: Receiving interaction information
- 111: Abstracting interaction information
- 112: Detecting sensitive information
- 113: Removing sensitive information
- 120: Determining next action information
- 130: Generating a response
- 131: Enriching the response
- 132: Validating the response
- 133: Detecting and Removing sensitive information
- 140: Sending the response

## Claims

1. Method (100) for protecting sensitive information in an interaction of a computer (4) with a counterpart (3), comprising:
receiving (110), by the computer (4), interaction information from the counterpart (3);
determining (120), by a first machine-learning model (1), next action information based on the interaction information and within context of the interaction;
generating (130), by a second machine-learning model (2), a response to the interaction information based on the next action information and within context of the interaction; and
sending (140), by the computer (4), the response to the counterpart (3).

2. Method according to claim 1, wherein
the first machine-learning model (1) has been trained on a plurality of previous interactions with a plurality of counterparts comprising sensitive information of the plurality of counterparts; and
the second machine-learning model (2) has been trained on general interaction data not comprising sensitive information.

3. Method according to claim 1 or 2, further comprising abstracting (111), by a third machine-learning model (5), the interaction information within context of the interaction, wherein the third machine-learning model (5) has been trained on general interaction data not comprising sensitive information.

4. Method according to claim 3, wherein abstracting (111) comprises detecting (112) and removing (113) sensitive information from the interaction information.

5. Method according to any one of claims 1 to 4, wherein generating (130) the response comprises enriching (131) the response with additional data from at least one external data source (6).

6. Method according to any one of claims 1 to 5, further comprising validating (132), by the second machine-learning model (2), the response based on the next action information and within context of the interaction.

7. Method according to any one of claims 1 to 6, further comprising, by the second machine-learning model (2), detecting and removing (133) sensitive information, which are not associated with the counterpart (3), from the response.

8. Method according to any one of claims 1 to 7, wherein the interaction between the computer (4) and the counterpart (3) is speech-based, optical, typed, or based on electronic interaction data.

9. Data processing system (10), comprising a first machine-learning model (1), a second machine-learning model (2), and a computer (4), for protecting sensitive information in an interaction of the computer (4) with a counterpart (3);
wherein the computer (4) is configured to receive interaction information from the counterpart (3) and to send a response to the interaction information to the counterpart (3);
wherein the first machine-learning model (1) is configured to determine a next action information based on the interaction information and within context of the interaction; and
wherein the second machine-learning model (2) is configured to generate the response based on the next action information and within context of the interaction.

10. Data processing system (10) according to claim 9, wherein
the first machine-learning model (1) has been trained on a plurality of previous interactions with a plurality of counterparts comprising sensitive information of the plurality of counterparts; and
the second machine-learning model (2) has been trained on general interaction data not comprising sensitive information.

11. Data processing system (10) according to claim 9 or 10, further comprising a third machine-learning model (5), which is configured to abstract the interaction information within context of the interaction, wherein the third machine-learning model (5) has been trained on general interaction data not comprising sensitive information.

12. Data processing system (10) according to claim 11, wherein the third machine-learning model (5) is further configured to detect and remove sensitive information from the interaction information.

13. Data processing system (10) according to any one of claim 9 to 12, wherein the second machine-learning model (2) is further configured to enrich the response with additional data from at least one external data source (6).

14. Data processing system (10) according to any one of claims 9 to 13, wherein the second machine-learning model (2) is further configured to validate the response based on the next action information and within context of the interaction.

15. Data processing system (10) according to any one of claims 9 to 14, wherein the second machine-learning model (2) is further configured to detect and remove sensitive information, which are not associated with the counterpart (3), from the response.

16. Data processing system (10) according to any one of claims 9 to 15, wherein the interaction between the computer (4) and the counterpart (3) is speech-based, optical, typed, or based on electronic interaction data.

17. Computer program product comprising instructions which, when the program is executed by a processing device, cause the processing device to carry out the method of any one of claims 1 to 8.

18. Computer-readable storage medium, data carrier, or data carrier signal carrying the computer program product of claim 17.
